## Europäisches Patentamt
## European Patent Office
## Office européen des brevets

(11) Publication number: **0 193 955**
A1

(12) **EUROPEAN PATENT APPLICATION**

(21) Application number: **86102972.6**

(22) Date of filing: **06.03.86**

(51) Int. Cl.⁴: **B 65 G 61/00**

(30) Priority: **06.03.85 IT 335885**

(43) Date of publication of application: **10.09.86**
**Bulletin 86/37**

(84) Designated Contracting States: **FR NL**

(71) Applicant: **DECCO-RODA S.p.A., Via Consolare, 2952, I-47032 Bertinoro (Forli') (IT)**

(72) Inventor: **Roda, Cesare, Via Don Minzoni 600, I-47023 Cesena (Forli) (IT)**

(74) Representative: **Modiano, Guido et al, MODIANO, JOSIF, PISANTY & STAUB Modiano & Associati Via Meravigli, 16, I-20123 Milan (IT)**

(54) **Machine for transferring bins and the like.**

(57) The automatic machine is adapted for picking up, from at least one loading station (3), and stacking and/or storing, at at least one unloading station (4), bins (2) containing in particular sorted out garden/orchard produce. It comprises a tower (8) driven horizontally along a line (5) with stations (3, 4) laid along either sides thereof, which carries two side members (43) movable in vertical and horizontal directions and being associated with the tower (8) by means operative to keep the bottom edges thereof horizontal and having at their bottoms supporting members (48) for the bin (2) bases. The machine moving members are operatively controlled by sensors arranged to sense the presence of bins at the stations and by a selector unit for selecting the loading and unloading stations.

"MACHINE FOR TRANSFERRING BINS AND THE LIKE"

This invention relates to a machine for transferring bins and the like and in particular for picking up bins, from at least one loading station, and stacking and/or storing said bins, at at least one unloading station.

In garden/orchard produce selection lines, it is known to separate the various products according to such characteristics as size, ripeness, color, and so forth, and place them into large capacity bins; the bins loaded with selected products, are conveyed on horizontal or floor-mounted conveyors and must then be taken away and stacked, usually in stacks of three bins.

Heretofore, for carrying into effect the bin transfer and stacking operations, it has been common practice to use either lift trucks or structures provided at each station stop of the sorted out products, which was expensive both in terms of equipment and its running costs. It should be considered, in fact, that the selection step may categorize up to twenty or so different types, and that bins loaded with the various sorted produce types are required to be kept separate.

It is the technical aim of this invention to provide a machine for transferring bins and the like and in particular a machine which is capable of automatically picking up such bins from at least one loading station and of stacking and/or storing them at at least one bin unloading station.

Within the above technical aim, it is an object of this invention to provide a machine for transferring bins which is versatile in that its operational potential can be expanded as desired or required, and in that it can readily accommodate an increased number of loading or storage stations, or possibly relative shifting thereof.

Another object of this invention is to provide such a machine which is simple construction-wise, relatively easy to manufacture, safe to use, and effective in operation, as well as of comparatively low cost.

According to one aspect of the invention the above aim and objects are achieved by a machine for transferring bins and the like, characterized in that it comprises a tower, driven horizontally along a line along either sides whereof said stations are laid, and adapted for carrying two side members, movable in vertical and horizontal directions and associated with said tower by means operative to keep the bottom edges thereof horizontal and having at their bottoms supporting members for bin bases, said machine being operatively controllable by sensors arranged to sense the presence of bins at the stations and by a selector unit for selecting the loading and unloading stations.

Further details will become more clearly apparent from the following detailed description of a preferred, though not exclusive, embodiment of the machine for transferring bins according to the invention, with reference to the accompanying illustrative but not limitative drawings, where:

Figure 1 is a front elevation view of the machine according to the invention schematically illustrating the various operating stages thereof;

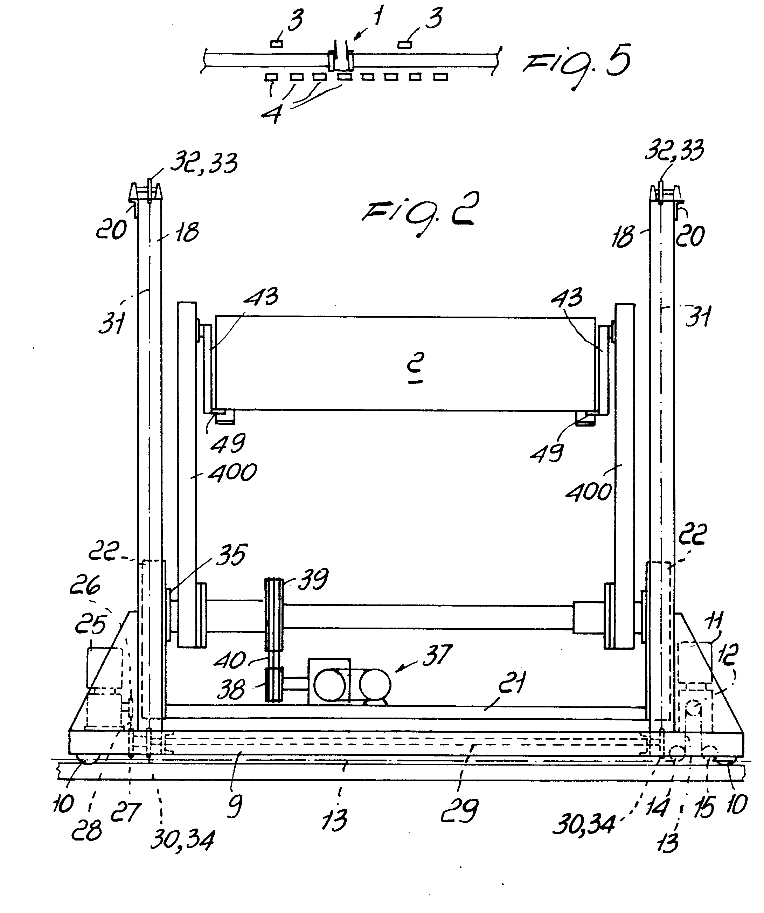

Figure 2 is a side view of the machine;

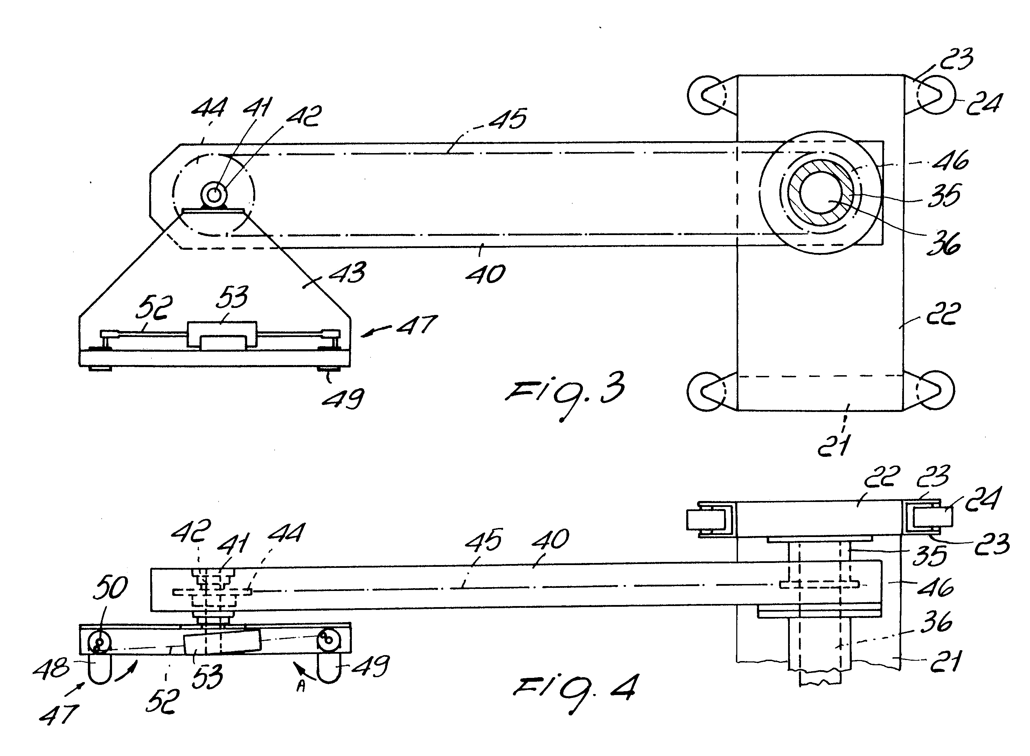

Figure 3 shows a front view of the movable members;

Figure 4 is a plan view of the movable members; and

Figure 5 is a schematic plan view of the machine of this invention as incorporated in a processing line.

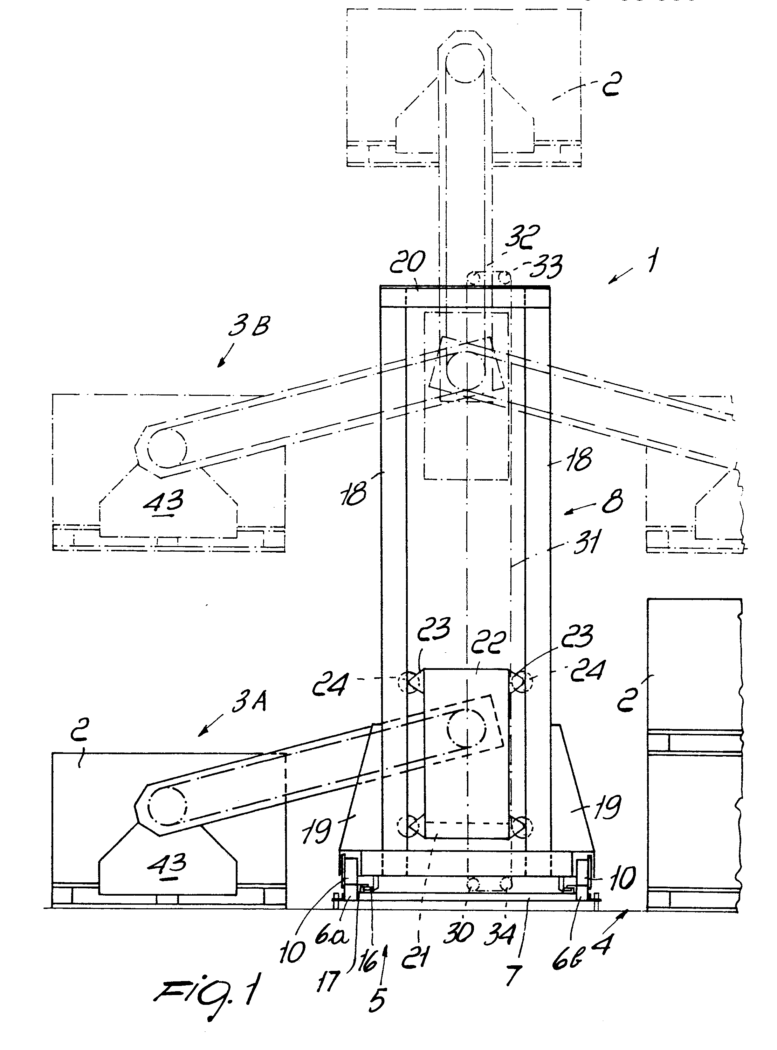

With particular reference to the drawing figures, indicated generally at 1 is a machine according to the invention for picking up bins 2 from at least one loading station 3 and stacking and/or storing them at at least one unloading station 4; in Figure 1, there are shown a floor-level loading position 3A and a raised loading position 3B (which may be the delivery area of a belt or roller conveyor), whilst the unloading position 4 is at floor-level and set up for stacking several bins upon one another, but it could also be raised off the floor.

The machine 1 is arranged to be movable horizontally along a line 5. In the example shown, the loading stations 3 are laid on the one side and the unloading ones 4 on the other side of the line 5, but they could be all laid on the same side of the line 5 or be intermingled on either sides of the line.

The line 5 is preferably composed of two rails 6a, 6b which are formed from rectangular cross-section tubular members joined together by floor-mounted crosspieces 7.

The machine 1 comprises a tower 8 which has a rectangular bed 9 formed from metal sectional members welded together. Mounted rotatably under the bed 9 are four wheels 10 advantageously of the outward lateral flange type for guided movement along the rails. The tower can be moved over the rails by a gear motor 11 which is expediently fastened to the floor and has a pinion sprocket 12 keyed to its output shaft around which is trained a chain 13 also trained downwardly around two more sprockets 14,15 mounted idly at the base of the bed 9 which has its ends attached to the ends of the line 5; operation of the sprocket 12 in either direction results in the tower being moved along the line in either direction.

To prevent the tower from toppling over, two or four shoes 16 are secured to the sides of the bed 9 and provided, on their top faces, with an anti-friction material lining and engaging slidingly with the bottom face of runways 17 attached to the rails.

From the bed 9 there extend vertically upwards four forward and rear uprights 18 which have welded to their bottoms respective triangular gussets 19 for stiffening the bed. The two forward uprights and the two rear uprights are joined at the top by two crosspieces 20 having a U-like cross-sectional configuration with their open sides or channels facing each other.

Movable vertically along the tower is a platform 21 whence there extend upwardly two vertical rectangular walls 22, each wall 22 having at its corner sides pairs of triangular ears 23 whereto respective idler rollers 24 are journalled for rolling along the channels of the uprights 18. To drive the platform 21 in the vertical direction, a gear motor 25 is mounted on the bed 9 the output shaft whereof is connected via sprockets 26,27 and an endless chain loop 28 to a longitudinal shaft 29 rotatably journalled below the bed. Journalled at the front and rear shelves of the tower defined by the uprights 18, by keying to the shaft 29, are two sprockets 30 for driving two respective chains 31, each having its ends attached respectively to the end and the base of one of the vertical walls 22. Each chain is entrained around three more sprockets 32,33,34 arranged such that the sprockets 30,32 are located at the centerlines of the front and rear sides of the tower, and the sprockets 33,34 lead the chains 31 in the area included between one flank of the walls 22 and the respective idler rollers 24.

Operation of the gear motor 25 in either direction results in the platform 21 being correspondingly raised or lowered in a guided fashion.

Attached to the walls 22 are two juxtaposed flanges 35 which have a longitudinal shaft 36 journalled thereto and being rotatably driven by a gear motor 37, rigidly associated with the platform 21 and driving grooved pulley 38, kinematically connected to a pulley 39 - by the belt 40. A pair of arms 400 of substantially rectangular box-type cross-sectional construction extending parallel to each other and lying slightly inwards of the walls 22 are secured on the shaft 36.

On their free ends, the pair of arms 400 each support a bush 41 having a pin 42 rotatably mounted therein, to which there are keyed, in turn, the top middle ends of two vertical side members 43; the two side members 43 each having the shape of an isosceles trapezoid merging downwardly with a rectangle, and being spaced apart from each other by a suitable distance. Keyed to each of the pins 42 is a sprocket wheel 44 which is drivingly connected by an endless chain 45 to a sprocket wheel 46 affixed to the flange 35 (and hence, held stationary relatively to the walls 22). This drive arrangement ensures that the bottom edges of the side members 43 are held always horizontal as the arms 40 are rotated.

Below each of the side members 43, there are supporting members 47 for the bin bases which comprise two supporting links or tongues 48,49 journalled on two vertical pins 50,51 mounted at the two ends of the bottom edges of the side members 43. The links are interconnected by a rod 52 articulated at its ends, on the one side, to a point located between the pin 50 and the link 48, and on the other side, to a point lying on the continuation of the link 49, thereby a longitudinal movement of the rod results in counter-rotation of the links in the direction of the arrow A in Figure 4. The rod is driven longitudinally in opposed directions by a solenoid 53; on energizing the solenoid 53, the links will be moved from a release position (rotated through 90° from that shown in Figure 4) underlying a respective side member, to a gripping position shown in Figure 4.

It should be noted that the supporting links, when in the gripping position, will fit under the bin base at the openings provided in the bin base which are usually utilized to accommodate the sprongs of fork lift trucks; obviously, the bins may be of a different type from the one shown, in which case the links would fit under a peripheral bottom border of the bin, or into suitable housing means.

The moving members of the machine are operatively controlled by bin sensing sensors located on the tower sides and/or under the side members 43, and by a central selection unit for selecting the loading and unloading stations, respectively.

It should be further noted that, to avoid excessive side unbalance, as the tower is being moved along the line 5, the arms would be kept upright in their top dead center positions with the bin in its condition of maximum lift off the floor.

It should be also noted that to stack the bins upon one another, and to keep equal distances between the loading and/or unloading stations and the line 5, the angle formed by the arms 400 from a horizontal plane at the loading or unloading time should be kept constant.

By changing the elevation of the platform, and the angle formed by the arms 400 from the horizontal in the loading and unloading conditions and the position of the tower along the line 5, it becomes possible to control loading and unloading stations variously located on either side of the line 5 and at different elevations.

With product sorter systems incorporating a large number of loading and unloading stations, or stations operating at a very high rate, it is envisaged that two or more machines according to this invention may be operated on one line 5.

The machine of this invention may be advantageously employed not only for transferring bins filled with produce but also to take the emptied bins to the loading stations.

Thus, the invention achieves the objects set forth.

The invention herein is susceptible to many modifications and changes without departing from the scope of the inventive concept.

Furthermore, all the details may be replaced with technical equivalents thereof.

In practicing the invention, the materials used, as well as the shapes and dimensions, may be any ones contingent on requirements, without this constituting a departure from the protection scope of the appended claims.

## CLAIMS

1. A machine for transferring bins and the like, characterized in that it comprises a tower (8) driven horizontally along a line (5) along the sides whereof stations (3,4) are laid and adapted for carrying two side members, movable in vertical and horizontal directions and associated with the tower (8) by means operative to keep the bottom edges thereof horizontal and having at their bottoms supporting members for bin (2) bases, said machine being operatively controllable by sensors arranged to sense the presence of bins at the stations (3,4) and by a selector unit for selecting the loading and unloading stations (3,4).

2. A machine according to Claim 1, characterized in that guided and driven vertically along said tower (8) is a platform (21) whereto there are articulated, along a parallel axis to the line (5), two mutually parallel arms (400) motor driven to move from one side of the line to the other through their top dead center and having said two side members articulated to their respective ends.

3. A machine according to Claim 1, characterized in that said tower (8) comprises a bed (9) having on its sides two pairs of flanged wheels (10) for said line (5) composed of two rails (6A,6B) and supporting a drive gear motor (11) carrying a sprocket (12) around which a chain section (13) laid along the rails (6a,6b) is entrained.

4. A machine according to Claim 3, characterized in that substantially from the corners of said bed (9), there rise four uprights (18) transversely joined in pairs at the top and left free longitudinally to admit said arms.

5. A machine according to Claim 3, characterized in that to prevent the tower (8) from toppling over, said bed (9) has on its sides at least two shoes (16) adapted to engage slidingly with the bottom faces of side runways (17) attached to the rails (6a,6b).

6. A machine according to Claim 2, characterized in that from said platform (21) there rise forwardly and rearwardly two rectangular vertical walls (22) each provided in the proximities of its corners with idler rollers (24) acting as guide members along the respective uprights (18) of the tower (8), and that the tower bed (9) mounts a drive gear motor (25) for two respective drive chains (31) having their ends attached to the walls (22) and being each entrained around four sprockets (30) rotatably journalled on the cross faces of the tower (8).

7. A machine according to Claim 2, characterized in that between said vertical walls (22)of the platform there is mounted for idle rotation a longitudinal shaft (29) with the ends whereof the ends of said parallel shafts are made fast and which is driven rotatively by a gear motor (25) mounted on the platform (21).

8. A machine according to Claim 2, characterized in that it further comprises two sprocket wheels (44) rigid with the side members (43) and coaxial with the pivot axis of the side members relatively to the arms and two sprocket wheels of the same diameter coaxial with the arm longitudinal shaft and rigid with the platforms walls (22) which are interconnected by two endless chains (45) for maintaining the bottom edges of said side members (43) horizontal.

9. A machine according to Claim 1, characterized in that said bin supporting members (47) comprise, for each side member (43), a pair of coplanar links (48,49) articulated to the side member (43) about vertical axes and being driven pivotally to move from a release position underlying the respective side member (43) to one of insertion under the bin base projecting toward the juxtaposed side member (43).

10. A machine according to Claim 9, characterized in that said links (48,49) for one side member (43) are interconnected by a rod (52) articulated at its ends respectively to a link (48) and to a continuation of the other link (49) for causing the links to counter-rotate, said rod being driven by a solenoid (53).

11. A machine according to Claim 1, characterized in that for stacking the bins (2), the platform (21) is raised to increasingly higher elevations while retaining constant the angle formed by the arms from a horizontal plane in the various release positions.

Fig.1

Fig. 5

Fig. 2

Fig. 3

Fig. 4

0 193 955

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 036 375 (MCCLINTIC et al.) * column 1, lines 6-10; column 1, line 53 - column 2, line 27; figures 1-11 * | 1 | B 65 G 61/00 |
| A | | 2,6,8 | |
| Y | DE-B-1 907 763 (G. SIEMPELKAMP & CO.) * column 3, line 6 - column 4, line 34; figure * | 1 | |
| A | | 2-4,6, 8,11 | |
| Y | US-A-2 988 237 (DEVOL) * column 1, line 42 - column 2, line 29; column 5, line 16 - column 6, line 14; figures 1, 2 * | 1 | |
| A | | 3 | |
| A | US-A-2 697 529 (HUBBELL et al.) * column 2, lines 50-59; figures 1, 5-7 * | 1,2,5 | |
| A | US-A-1 418 003 (LADD) * page 2, lines 72-84; figure 5 * | 10 | |

**TECHNICAL FIELDS SEARCHED (Int. Cl.4)**

B 65 G 47/00
B 65 G 57/00
B 65 G 60/00
B 65 G 61/00
B 65 G 63/00
B 66 F 9/00

The present search report has been drawn up for all claims

| Place of search | Date of completion of the search | Examiner |
|---|---|---|
| BERLIN | 29-05-1986 | SIMON J J P |